# EUROPÄISCHE PATENTSCHRIFT

(11) **EP 0 978 029 B1**
(45) Veröffentlichungstag und Bekanntmachung des Hinweises auf die Patenterteilung: **03.08.2005**
(21) Anmeldenummer: 99911688.2
(22) Anmeldetag: 19.02.1999
(51) Int. Cl.: G06F 7/06

(54) **SYSTEM UND VERFAHREN ZUR IDENTIFIZIERUNG UND AUTHENTIFIZIERUNG VON ZUBEHÖR, HILFS- UND/ODER BETRIEBSSTOFFEN FÜR TECHNISCHE GERÄTE**
SYSTEM AND METHOD FOR IDENTIFYING AND AUTHENTICATING ACCESSORIES, AUXILIARY AGENTS AND/OR FUELS FOR TECHNICAL APPARATUS
SYSTEME ET PROCEDE POUR IDENTIFIER ET AUTHENTIFIER DES ACCESSOIRES, DES AGENTS AUXILIAIRES ET/OU DES MATIERES CONSOMMABLES POUR DES APPAREILS TECHNIQUES

(30) Priorität: 20.02.1998 DE 19807177; 20.05.1998 DE 19822751
(43) Veröffentlichungstag der Anmeldung: 09.02.2000
(73) Patentinhaber: Kabushiki Kaisha Hitachi Seisakusho (Hitachi, Ltd.), Chiyoda-ku, Tokyo 100-8280 (JP)
(72) Erfinder: RUDLOFF, Peter, D-68526 Ladenburg (DE)
(74) Vertreter: Schlimme, Wolfram, Dr.-Ing.
(86) Internationale Anmeldenummer: PCT/EP1999/001091
(87) Internationale Veröffentlichungsnummer: WO 1999/042921

(56) Entgegenhaltungen:
- EP-A- 0 733 991
- WO-A-97/11790
- DE-A- 3 205 420
- US-A- 5 361 913

## Beschreibung

Die Erfindung betrifft ein Verfahren und ein System zur Identifizierung und Authentifizierung.

Es kommt häufig vor, daß Zubehörteile oder Hilfsstoffe beziehungsweise Betriebsstoffe für technische Geräte außer vom Hersteller des technischen Gerätes auch von Drittanbietern hergestellt und vertrieben werden. Häufig entsprechen derartige Produkte von Drittanbietern nicht den hohen Qualitäts- und Sicherheitsanforderungen des Herstellers des technischen Geräts, lassen sich jedoch ohne größere technische Probleme in Verbindung mit dem technischen Gerät einsetzen. Für den Hersteller eines technischen Geräts ist es im allgemeinen schwierig, die Zuverlässigkeit und Sicherheit des technischen Geräts zu gewährleisten, wenn derartige Zubehörprodukte oder Hilfs- beziehungsweise Betriebsstoffe von Drittanbietern eingesetzt werden, da die Entscheidung über den Einsatz derartiger Drittanbieter-Produkte im allgemeinen beim Benutzer des technischen Geräts liegt.

Es ist daher nicht nur im Interesse des Geräteherstellers sondern auch im Interesse der Benutzer derartiger technischer Geräte, wenn zuverlässig gewährleistet wird, daß technische Geräte ausschließlich mit vom Gerätehersteller autorisiertem Zubehör und mit vom Gerätehersteller autorisierten Hilfsbeziehungsweise Betriebsstoffen eingesetzt werden können.

Die US-A 5,361,913 offenbart eine Rücknahmevorrichtung für Flaschen, die mit einer Barcode-Lesevorrichtung versehen sind, wobei der Barcode herstellerabhängige und produktabhängige Information enthält. Auf der Grundlage eines im Barcode enthaltenen Schlüssels wird in einer im Gerät hinterlegten Datenbank ermittelt, ob eine in das Gerät eingeführte Flasche als Pfandflasche zu akzeptieren und weiterzubehandeln ist. Eine auf der Flasche ebenfalls vorgesehene, maschinenlesbare Markierung mit besonderen spektralen Antworteigenschaften kann als zusätzliche Authentifizierung vorgesehen sein.

Die WO 97/11790 A1 offenbart ein System und ein Verfahren zum Lesen von Paketinformationen. In diesem bekannten System erfaßt ein Bilderzeugungssystem ein Bild einer Paketoberfläche, die einen maschinenlesbaren Code und eine alphanumerische Zieladresse enthält. Der maschinenlesbare Code wird von einem Etikettendekodierungssystem entschlüsselt und die Zieladresse wird mittels OCR-Technik gelesen. Dann wird durch Kombination der entschlüsselten Codedaten mit den korrekten Zieladressdaten ein vereinter Paketdatensatz erzeugt. Dieser Datensatz wird zur nachfolgenden Sortierung und Routenverfolgung des Pakets verwendet.

Es ist die Aufgabe der vorliegenden Erfindung, ein Verfahren und eine Vorrichtung zur Identifizierung und Authentifizierung zu schaffen, die eine eindeutige Identifizierung einer Autorisierung durch den Hersteller eines technischen Geräts zulassen und die es gestatten, die Verbreitung von nichtautorisiertem Zubehör beziehungweise von nichtautorisierten Hilfs- oder Betriebsstoffen zu unterbinden. Weiterhin soll eine zusätzliche visuelle Überprüfung und eine einfache maschinelle überprüfung mit nur einer Lese- und Auswertevorrichtung erreicht werden.

Diese Aufgabe wird durch das im Anspruch 1 angegebene Verfahren und die im Anspruch 2 angegebene Vorrichtung gelöst.

Das Vorsehen der Bildinformation, also der für das menschliche Auge erkennbaren und für einen menschlichen Betrachter unterscheidungskräftigen Information, auf dem Zubehör beziehungsweise den Hilfs- oder Betriebsstoffen oder deren Aufbewahrungsgefäßen und der Lese- und Auswertevorrichtung für diese Information am technischen Gerät ermöglicht es, daß das technische Gerät vorzugsweise ebenfalls visuell überprüfen kann, ob die auf dem Datenträgerabschnitt vorgesehene Information mit einer im technischen Gerät gespeicherten vorgegebenen Information übereinstimmt, sodaß nur bei Übereinstimmung ein Betrieb eines technischen Geräts ermöglicht wird. Diese Authentifizierungsfunktion des erfindungsgemäßen Systems wird ergänzt durch die Erkennbarkeit der Information für das menschliche Auge und durch deren für einen menschlichen Betrachter im allgemeinen unmittelbar, das heißt ohne längeres Betrachten, unterscheidungskräftige Eigenschaft. Somit kann der Benutzer zunächst mit den eigenen Augen überprüfen, ob es sich bei dem Zubehör beziehungsweise bei den Hilfs- oder Betriebsstoffen um vom Hersteller autorisierte Produkte handelt.

Insbesondere vorteilhaft ist es, wenn die für das menschliche Auge erkennbare und für den menschlichen Betrachter unterscheidungskräftige Information von einem Markenzeichen gebildet ist. Wird die Benutzung des technischen Geräts mit dem Zubehör beziehungsweise den Hilfs- oder Betriebsstoffen in diesem Fall nur dann freigegeben, wenn auf dem Datenträgerabschnitt das für das menschliche Auge erkennbare Markenzeichen, in der Regel eine registrierte und geschützte Marke des Herstellers, vorgesehen ist, so kann der Hersteller den Vertrieb von nichtautorisiertem Zubehör beziehungsweise nichtautorisierten Hilfs- oder Betriebsstoffen für das technische Gerät unmittelbar aufgrund einer Markenverletzung unterbinden, da ein nichtautorisierter Dritthersteller, um die Funktionsfähigkeit zu gewährleisten, das anderweitig geschützte Markenzeichen in unerlaubter Weise benutzen muß. Anstelle eines Markenzeichens kann auch ein anderweitig geschütztes graphisches oder schriftbildliches Element vorgesehen sein.

Da der Datenträgerabschnitt einen ersten Bereich aufweist, in dem nur maschinenlesbare Information gespeichert ist und einen zweiten Bereich, in dem die für das menschliche Auge erkennbare und für den menschlichen Betrachter unterscheidungskräftige Information gespeichert ist, lassen sich zusätzlich zu der für das menschliche Auge erkennbaren Information noch Daten auf dem Datenträgerabschnitt unterbringen, die ebenfalls von der Lese- und Auswertevorrichtung des technischen Geräts gelesen und ausgewertet werden können, wobei diese Daten beispielsweise technische Daten des Produkts, also des entsprechenden Zubehörs oder des entsprechenden Hilfs- oder Betriebsstoffes, aufweisen. In diesem Fall enthält der erste Bereich eine variable, produktabhängige Information, während der zweite Bereich eine statische, für alle Produkte gleiche, herstellerabhängige Information umfaßt.

Vorzugsweise ist auf dem Datenträgerabschnitt zumindest eine Referenzmarkierung für die Orientierung der Lesevorrichtung vorgesehen. Hierdurch wird eine sichere Erkennung der Daten auf dem Datenträgerabschnitt gewährleistet, auch wenn der Datenträgerabschnitt in unterschiedlichen Lagen an der Lesevorrichtung vorbeigeführt wird.

Weiter vorzugsweise ist die auf dem ersten Bereich des Datenträgerabschnitts gespeicherte Information von einem maschinenlesbaren Code gebildet und die auf dem zweiten Bereich des Datenträgerabschnitts gespeicherte Information ist von einem Markenzeichen gebildet.

In einer weiteren bevorzugten Ausführungsform weist der erste Bereich des Datenträgerabschnitts eine Vielzahl von Zeilen eines binären Pixelcodes auf, wobei der binäre Pixelcode eine Mehrzahl von Zeilen der nur maschinenlesbaren Information enthält, und der zweite Bereich des Datenträgerabschnitts weist eine Mehrzahl von Zeilen eines Pixelcodes auf, die gemeinsam die für das menschliche Auge erkennbare und für den menschlichen Betrachter unterscheidungskräftige Information bilden.

Durch den zeilenweisen binären Pixelcode im ersten Bereich wird eine Codierungsmöglichkeit geschaffen, die eine sehr hohe Datendichte pro Flächeneinheit des Datenträgerabschnitts gestattet.

Die Darstellung der für das menschliche Auge erkennbaren und für den menschlichen Betrachter unterscheidungskräftigen Information als zeilenweiser Pixelcode erleichtert die Auswertung der Information des Datenträgerabschnitts, die auf diese Weise mit ein und derselben Lese- und Auswertevorrichtung für den ersten Bereich und den zweiten Bereich erfolgen kann.

Bevorzugt ist zwischen dem ersten Bereich des Datenträgerabschnitts und dem zweiten Bereich des Datenträgerabschnitts eine maschinenlesbare Grenzmarkierung vorgesehen, die vorzugsweise aus zumindest einer Leerzeile besteht. Hierdurch wird sowohl für das menschliche Auge als auch für die Lesevorrichtung eine klare Abgrenzung des ersten und zweiten Bereichs geschaffen.

Außerdem wird bevorzugt, wenn die Referenzmarkierung einen zumindest einen der beiden Bereiche des Datenträgerabschnitts umgreifenden Rahmen aufweist.

Zur Erleichterung des Auslesens weist der binäre Pixelcode einer Zeile jeweils eine Reihe von nebeneinanderliegenden Bit-Markierungen der binären Darstellung einer Information auf.

Vorzugsweise sind zur Erhöhung der Auslesesicherheit in jeder Zeile zusätzlich binäre Bit-Markierungen für eine Prüfziffer für die binäre Darstellung der Information vorgesehen.

Die Erfindung wird nachfolgend anhand eines Beispiels unter Bezugnahme auf die Zeichnungen näher erläutert; in dieser zeigt:
- Fig. 1: den schematisch Aufbau eines erfindungsgemäßen Systems,
- Fig. 2: einen Datenträgerabschnitt eines erfindungsgemäßen Systems und
- Fig. 3: ein Blockschaltbild des erfindungsgemäßen Systems.

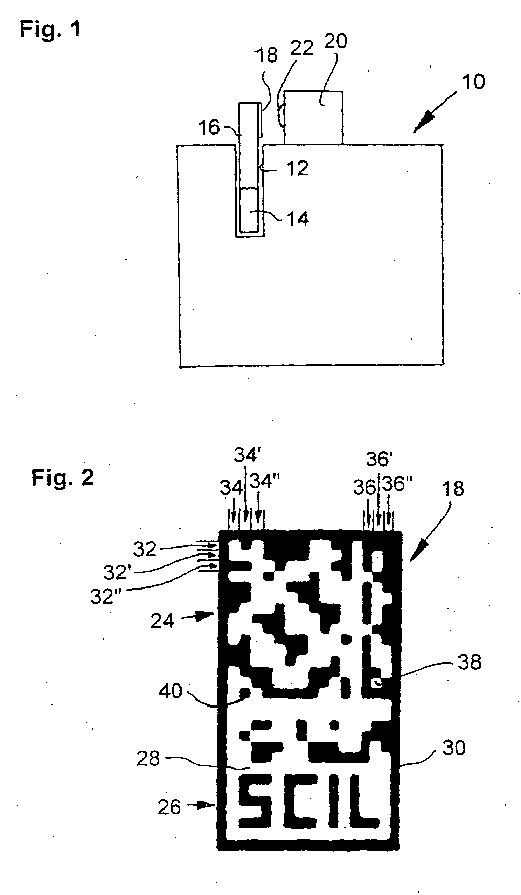

Fig. 1 ist eine schematische Darstellung eines technischen Geräts 10, das eine Aufnahme 12 für ein Hilfsstoff 14 enthaltendes Aufbewahrungsgefäß 16 aufweist. Beispielsweise handelt es sich bei dem technischen Gerät um ein Analysegerät für die automatische Analyse von chemischen oder biologischen Proben, wobei der Hilfsstoff von einem Reagenz gebildet ist, das zur Analyse einer bestimmten (nicht gezeigten) Probe im technischen Gerät 10 verwendet wird.

Das Aufbewahrungsgefäß 16 ist in seinem oberen Bereich mit einem Datenträgerabschnitt 18 versehen, der nachfolgend unter Bezugnahme auf Fig. 2 noch näher erläutert wird. Am technischen Gerät 10 ist eine Lese- und Auswertevorrichtung 20 vorgesehen, die beispielsweise eine Videokamera oder eine Still-Videokamera aufweist, deren Objektiv 22 auf den Datenträgerabschnitt 18 gerichtet ist.

In Fig. 2 ist der Datenträgerabschnitt 18 stark vergrößert wiedergegeben. Der Datenträgerabschnitt 18 weist einen ersten Bereich 24 auf, in dem eine maschinenlesbare Information gespeichert ist. Weiterhin weist der Datenträgerabschnitt 18 einen zweiten Bereich 26 auf, in dem eine für das menschliche Auge erkennbare und für den menschlichen Betrachter unterscheidungskräftige Information gespeichert ist. Im Beispiel der Fig. 2 ist das die Buchstabenfolge "SCIL".

Zwischen dem ersten und dem zweiten Bereich ist eine Leerzeile als Grenzmarkierung 28 vorgesehen, in der keine Binärinformation gespeichert ist. Der erste Bereich 24 und der zweite Bereich 26 sowie die Grenzmarkierung 28 sind gemeinsam von einem eine Referenzmarkierung 30 bildenden Rahmen umgeben.

Der erste Bereich 24 umfaßt eine Vielzahl von Zeilen, 32, 32', 32" eines binären Pixelcodes, der pro Zeile eine Vielzahl von Spalten 34, 34', 34" aufweist, wobei jede Kombination aus Zeile und Spalte einen Pixelort darstellt, der entweder durch ein weißes oder ein schwarzes Pixel eine binäre optische Information enthält. Am rechten Ende der Zeilen sind drei Spalten 36, 36', 36" vorgesehen, die jeweils in Verbindung mit einer Zeile einen binären Code einer Prüfziffer für die jeweilige Zeile enthalten.

Im vorliegenden Beispiel bezeichnet eine weiße Bit-Markierung 38 den Binärwert "0", wohingegen eine schwarze Bit-Markierung 40 den Binärwert "1" bezeichnet.

Im zweiten Bereich 26 sind die Buchstaben "SCIL" durch entsprechende zeilenweise Binärmarkierungen gebildet, wobei die Gesamtheit der Zeilen im zweiten Bereich 26 die für das menschliche Auge erkennbare und für einen menschlichen Betrachter unterscheidungskraftige Buchstabenkombination "SCIL" bilden. Anstelle von Buchstaben kann im zweiten Bereich genausogut eine graphische Darstellung, beispielsweise eine Logo, abgebildet sein.

Wird im Betrieb der Datenträgerabschnitt 18 von der Kamera der Lese- und Auswertevorrichtung 20 erfaßt, so wird zunächst anhand der Referenzmarkierung der die Information tragende Bereich des Datenträgerabschnitts identifiziert. Danach wird das von der Kamera erzeugte Bild zeilenweise analysiert, um festzustellen, ob an einem entsprechenden Pixelort (Kombination aus Zeile und Spalte) eine helle oder dunkle oder farbige Bit-Markierung vorhanden ist, wobei unterschiedliche farbige Bit-Markierungen zur Erhöhung der Informationsdichte vorgesehen sein können. Die zeilenweise Codierung im ersten Bereich 24 wird entsprechend einem vorgegebenen Codierungsalgorythmus decodiert und der zweite Bereich 26 wird aufgrund der Grenzmarkierung 28 identifiziert. Die Abbildung des zweiten Bereichs 26 wird mit einer in einem Speicher des technischen Geräts 10 gespeicherten Abbildung verglichen, woraufhin, wenn der Vergleich eine Identität der gespeicherten Abbildung mit der erfaßten Abbildung des Datenträgers 18 ergibt, ein Authentifizierungssignal im technischen Gerät 10 erzeugt wird, das im vorliegenden Beispiel den Hilfsstoff 14 für die Durchführung einer Analyse zuläßt und damit die Analyse ermöglicht. Wird aufgrund einer fehlenden Übereinstimmung kein Authentifizierungssignal erzeugt, so wird eine Fehlermeldung am technischen Gerät 10 ausgegeben und dessen Betrieb für den Hilfsstoff 14 gesperrt.

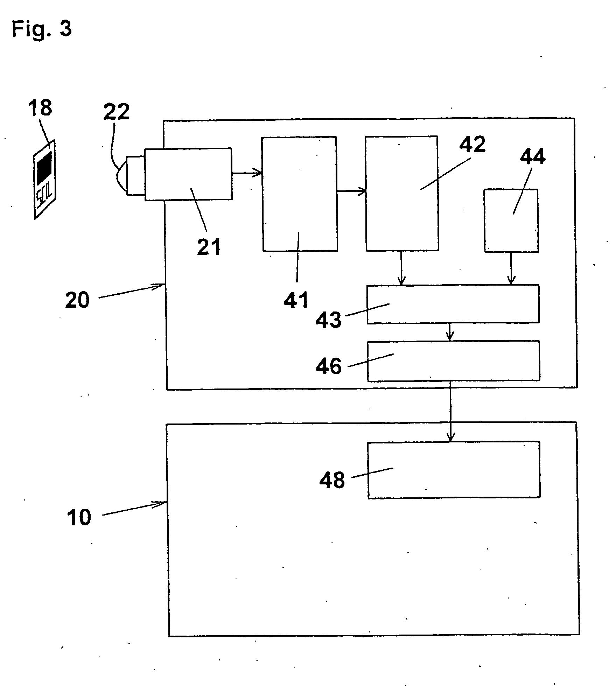

In Fig. 3 ist ein Blockschaltbild dargestellt, das den prinzipiellen Aufbau des erfindungsgemäßen Systems zur Identifizierung und Authentifizierung zeigt. Das vom Objektiv 22 der Kamera 21 vom Datenträgerabschnitt 18 aufgenommene optische Signal wird in der Kamera 21 auf herkömmliche Weise in ein elektronisches Bildsignal verwandelt. Das elektronische Bildsignal wird in einer Ausleseeinrichtung 41 zum Beispiel zeilenweise ausgelesen und in einer nachgeordneten Decodiereinrichtung 42 unter Verwendung eines vorgegebenen Decodier-Algorythmus' decodiert. Die so erhaltene Information wird in eine Vergleichseinrichtung 43 weitergeleitet, in der diese vom Datenträgerabschnitt 18 ausgelesene Information mit einer in einer Speichereinrichtung 44 gespeicherten Information verglichen wird.

Im Fall der Übereinstimmung der gelesenen Information mit der gespeicherten Information wird von der Vergleichseinrichtung 43 ein Freigabesignal an eine Freigabesteuerung 46 gesandt, welche daraufhin eine Funktionskomponente 48 des technischen Geräts 10 freigibt, so daß das technische Gerät 10 betriebsbereit ist.

Führt der Vergleich der gelesenen Information und der gespeicherten Information in der Vergleichseinrichtung 43 zu keiner Übereinstimmung der beiden Informationen, so wird ein Blockierungssignal von der Vergleichseinrichtung 43 an die Freigabesteuerung 46 gesandt, die daraufhin die Funktionskomponente 48 des technischen Geräts sperrt, so daß das technische Gerät nicht betriebsbereit ist, und ein optisches und/oder akustisches Signal wird ausgelöst, um das Bedienpersonal des technischen Geräts 10 auf die fehlende Betriebsbereitschaft des technischen Geräts hinzuweisen.

Die Funktionskomponente 48 kann beispielsweise eine Stromversorgung oder eine Steuerungs- und/oder Regeleinrichtung für das technische Gerät 10 oder für einen Teil des technischen Geräts 10 sein.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

So könnte auch beispielsweise eine Spiegelreflexkamera oder eine Vidoekamera mit einer erfindungsgemäßen Lese- und Auswertevorrichtung ausgestattet sein und die Wechselobjektive für diese Kamera könnten mit einem erfindungsgemäßen Datenträgerabschnitt versehen sein, um an dieser Kamera nur den Einsatz von Originalobjektiven des Kameraherstellers zu ermöglichen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Verfahren zur Identifizierung und Authentifizierung von Betriebsstoffen für technische Geräte, wobei die Betriebsstoffe oder deren Aufbewahrungsgefäße mit einem Datenträgerabschnitt versehen sind der in einem ersten Bereich eine erste Information als Pixelcode aufweist, die variabel, produktabhängig und maschinenlesbar ist, und der in einem zweiten Bereich als zweite Information eine Mehrzahl von Zeilen eines Pixelcodes aufweist, die gemeinsam ein von einem Benutzer visuell überprüfbares Logo oder ein schriftbildliches Element bilden, wobei die zweite Information für alle Produkte gleich und herstellerabhängig ist, mit den Schritten:
a) Erfassen der auf dem Datenträgerabschnitt (18) vorhandenen optischen Information;
b) Identifizieren des ersten und zweiten Bereichs (24, 26) des Datenträgerabschnitts (18);
c) Zeilenweises Auslesen und Decodieren der im ersten Bereich (24) enthaltenen maschinenlesbaren Information mittels einer less- und Auswertevorrichtung (20);
d) Zeilenweises Auslesen der im zweiten Bereich (26) enthaltenen Bildinformation mit der less- und Auswertevorrichtung (20);
e) Vergleichen des Loges oder des schriftbildlichen Elements des zweiten Bereichs (26) mit einer in einem Speicher des technischen Geräts (10) gespeicherten Abbildung;
f) Erzeugen eines Authentifizierungssignale auf der Grundlage das Logos oder das schriftbildlichen Elements, wenn das Logo oder das schriftbildliche Element des zweiten Bereichs (26) als mit der gespeicherten Abbildung übereinstimmend erkannt worden ist, und Freigeben des technischen Geräts für den Betrieb oder
Sperren des technischen Geräts, wenn das Logo oder das schriftbildliche Element des zweiten Bereichs (26) als mit der gespeicherten Abbildung nicht übereinstimmend erkannt worden ist.

2. System zur Identifizierung und Authentifizierung von Betriebsstoffen für technische Geräte, das speziell angepasst ist, um sämtliche Verfahrensschritte des Anspruchs 1 auszuführen.

3. System nach Anspruch 2,
**dadurch gekennzeichnet,**
**daß** die zweite Information von einem Markenzeichen gebildet ist.

4. System nach einem der Ansprüche 2 und 3,
**dadurch gekennzeichnet,**
**daß** auf dem Datenträgerabschnitt (18) zumindest eine Referenzmarkierung (30) für die Orientierung der Lesevorrichtung (20) vorgesehen ist.

5. System nach einem der Ansprüche 2 bis 4,
**dadurch gekennzeichnet,**
- **daß** der erste Bereich (24) des Datenträgerabschnitts (18) eine Vielzahl von Zeilen (32, 32', 32") eines binären Pixelcodes aufweist, wobei der binäre Pixelcode die nur maschinenlesbare Information enthält.

6. System nach einem der Ansprüche 2 bis 5
**dadurch gekennzeichnet,**
**daß** zwischen dem ersten Bereich (24) des Datenträgerabschnitts (18) und dem zweiten Bereich (26) des Datenträgerabschnitts (18) eine maschinenlesbare Grenzmarkierung (28) vorgesehen ist, die vorzugsweise aus zumindest einer Leerzeile besteht.

7. System nach einem der Ansprüche 2 bis 6
**dadurch gekennzeichnet,**
**daß** die Referenzmarkierung (30) einen zumindest einen der beiden Bereiche (24, 26) des Datenträgerabschnitts (18) umgreifenden Rahmen aufweist.

8. System nach einem der Ansprüche 2 bis 7
**dadurch gekennzeichnet,**
**daß** der binäre Pixelcode einer Zeile (32, 32', 32") jeweils eine Reihe von nebeneinanderliegenden Bit-Markierungen (34, 34', 34") der binären Darstellung einer Information aufweist.

9. System nach Anspruch 8,
**dadurch gekennzeichnet,**
**daß** in jeder Zeile (32, 32', 32") zusätzlich binäre Bit-Markierungen (36, 36', 36") für eine Prüfziffer für die binäre Darstellung der Information vorgesehen sind.

## Claims

1. A method for identifying and authenticating operating substances for technical equipment, wherein the operating substances or their storage containers are provided with a data carrier portion, which in a first region comprises a first item of information as a pixel code, which is variable, product-dependent and machine-readable, and in a second region comprises as a second item of information a plurality of lines of a pixel code, which together form a logo or a typographic element that can be visually checked by a user, the second item of information being the same for all products and manufacturer-dependent, with the steps:
a) acquiring the optical information present on the data carrier portion (18);
b) identifying the first and second regions (24, 26) of the data carrier portion (18);
c) linewise reading out and decoding the machine-readable information contained in the first region (24) by a reading and evaluating device (20);
d) linewise reading out the image information contained in the second region (26) by the reading and evaluating device (20) ;
e) comparing the logo or the typographic element of the second region (26) with an image stored in a memory of the technical equipment (10;
f) generating an authenticating signal based on the logo or the typographic element when the logo or the typographic element of the second region (26) has been recognised as coinciding with the stored image and enabling the operation of the technical equipment or
blocking the technical equipment when the logo or the typographic element of the second region (26) has not been recognised as coinciding with the stored image.

2. A system for identifying and authenticating operating substances for technical equipment, the system being specifically adapted to carry out all method steps of claim 1.

3. A system according to claim 2, **characterized in that** the second item of information is formed by a trade mark.

4. A system according to one of claims 2 and 3, **characterized in that** at least one reference marking (30) for the orientation of the reading device (20) is provided on the data carrier portion (18).

5. A system according to one of claims 2 to 4,
**characterized in that**
the first region (24) of the data carrier portion (18) has a multiplicity of lines (32, 32', 32") of a binary pixel code, the binary pixel code containing the only machine-readable information.

6. A system according to one of claims 2 to 5, **characterized in that** there is provided, between the first region (24) of the data carrier portion (18) and the second region (26) of the data carrier portion (18), a machine-readable limit marking (18), which preferably comprises at least one blank line.

7. A system according to one of claims 2 to 6, **characterized in that** the reference marking (30) has a frame embracing at least one of the two regions (24, 26) of the data carrier portion (18).

8. A system according to one of claims 2 to 7, **characterized in that** the binary pixel code of a line (32, 32', 32") has in each case a row of adjacently lying bit markings (34, 34', 34") of the binary representation of an item of information.

9. A system according to claim 8, **characterized in that** there are provided in each line (32, 32', 32") additional binary bit markings (36, 36', 36") for a check digit for the binary representation of the item of information.

## Revendications

1. Procédé pour identifier et authentifier des matières consommables pour des appareils techniques, les matières consommables ou leurs récipients de stockage étant pourvu(e)s d'un élément porteur de données qui présente dans une première zone une première information sous forme de code pixels qui est variable, dépendante du produit et lisible à la machine, et qui présente dans une seconde zone, à titre de seconde information, une pluralité de lignes d'un code pixels qui forment conjointement un logo ou bien un élément écrit vérifiable visuellement par un utilisateur, la seconde information étant identique pour tous les produits et dépendant du producteur, comprenant les étapes suivantes :
a) saisie de l'information optique présente sur l'élément porteur de données (18) ;
b) identification de la première et de la seconde zone (24, 26) de l'élément porteur de données (18) ;
c) lecture par ligne et décodage de l'information lisible à la machine et contenue dans la première zone (24) au moyen d'un dispositif de lecture et d'évaluation (20) ;
d) lecture par ligne de l'information d'image contenue dans la seconde zone (26) au moyen du dispositif de lecture et d'évaluation (20) ;
e) comparaison du logo ou de l'élément écrit de la seconde zone (26) avec une représentation mémorisée dans une mémoire de l'appareil technique (10) ;
f) émission d'un signal d'authentification en se basant sur le logo ou sur l'élément écrit, si le logo ou l'élément écrit de la seconde zone (26) a été reconnu identique à la représentation mémorisée, et libération de l'appareil technique pour le fonctionnement ou
blocage de l'appareil technique si le logo ou l'élément écrit de la seconde zone (26) n'a pas été reconnu identique à la représentation mémorisée.

2. Système pour identifier et authentifier des matières consommables pour des appareils techniques, qui est spécialement adapté pour exécuter toutes les étapes du procédé de la revendication 1.

3. Système selon la revendication 2, **caractérisé en ce que** la seconde information est formée par une marque.

4. Système selon l'une des revendications 2 et 3, **caractérisé en ce qu'**il est prévu sur l'élément porteur de données (18) au moins un marquage de référence (30) pour l'orientation du dispositif de lecture (20).

5. Système selon l'une des revendications 2 à 4, **caractérisé en ce que** la première zone (24) de l'élément porteur de données (18) présente une multitude de lignes (32, 32', 32") d'un code pixels binaire, le code pixels binaire contenant uniquement l'information lisible à la machine.

6. Système selon l'une des revendications 2 à 5, **caractérisé en ce qu'**il est prévu entre la première zone (24) de l'élément porteur de données (18) et la seconde zone (26) de l'élément porteur de données (18) un marquage de limite (28) lisible à la machine, qui est constitué de préférence par au moins une ligne vide.

7. Système selon l'une des revendications 2 à 6, **caractérisé en ce que** le marquage de référence (30) comprend un cadre qui entoure l'une au moins des deux zones (24, 26) de l'élément porteur de données (18).

8. Système selon l'une des revendications 2 à 7, **caractérisé en ce que** le code pixels binaire d'une ligne (32, 32', 32'') présente une rangée respective de marquages de bits juxtaposés (34, 34', 34'') de la représentation binaire d'une information.

9. Système selon la revendication 8, **caractérisé en ce qu'**il est prévu dans chaque ligne (32, 32', 32'') en supplément des marquages de bits binaires (36, 36', 36'') pour un chiffre de contrôle pour la représentation binaire de l'information.
